Europäisches Patentamt

European Patent Office

Office européen des brevets

(19)

(11) Veröffentlichungsnummer: **0 362 503**

**A1**

(12) **EUROPÄISCHE PATENTANMELDUNG**

(21) Anmeldenummer: 89113851.3

(22) Anmeldetag: 27.07.89

(51) Int. Cl.⁵: **B60R 22/06**

(30) Priorität: 06.09.88 DE 3830288

(43) Veröffentlichungstag der Anmeldung:
11.04.90 Patentblatt 90/15

(84) Benannte Vertragsstaaten:
DE ES FR GB IT NL SE

(71) Anmelder: TRW REPA GMBH
Industriestrasse 20
D-7077 Alfdorf(DE)

(72) Erfinder: Stütz, Michael
Hauffstrasse 13
D-7071 Spraitbach(DE)
Erfinder: Mödinger, Thomas
Birkenweg 15
D-7077 Vordersteinenberg(DE)

(74) Vertreter: Degwert, Hartmut, Dipl.-Phys. et al
Patent Attorneys Prinz, Leiser, Bunke &
Partner Manzingerweg 7
D-8000 München 60(DE)

(54) Verriegelungsvorrichtung für den Mitnehmer eines Passiv-Sicherheitsgurtsystems.

(57) Die Verriegelungsvorrichtung für den Mitnehmer (5) eines Passiv-Sicherheitsgurtsystems umfaßt einen schwenkbar gelagerten Sperhaken (28), der den Mitnehmer (5) in seiner der Gurtanlegestellung entsprechenden Endstellung sichert. Der Sperrhaken (28) ist auf derjenigen Seite des Mitnehmers (5) angeordnet, zu welcher die bei einer Unfallbeanspruchung am Mitnehmer (5) auftretende Zugkraft (F) gerichtet ist. Die Nase (32) des Sperrhakens (28) taucht in eine Ausnehmung (34) an der Oberkante des Mitnehmers (5) ein. Auch nach hoher Unfallbeanspruchung durch einen Frontalaufprall, bei welchem eine Verformung der belasteten Teile eintritt, bleibt der Sperrhaken (28) zuverlässig mit dem Mitnehmer (5) in Eingriff.

**Fig. 2**

EP 0 362 503 A1

# Verriegelungsvorrichtung für den Mitnehmer eines Passiv-Sicherheitsgurtsystems

Die Erfindung betrifft eine Verriegelungsvorrichtung für den in einer Führung zwischen einer Gurtanlegestellung und einer Gurtablegestellung beweglichen Mitnehmer eines Passiv-Sicherheitsgurtsystems, mit einem schwenkbar gelagerten Sperrhaken, der in der Gurtanlegestellung des Mitnehmers an diesem angreift.

Bei einem Passiv-Sicherheitsgurtsystem wird das obere Ende des Schultergurtes an einem Mitnehmer befestigt, der in einer Führungsschiene durch ein beliebiges Antriebsmittel zwischen zwei Endstellungen geführt wird. Die eine, vordere Endstellung entspricht der Gurtablegestellung, die ein weitgehend unbehindertes Ein- und Aussteigen aus einem Kraftfahrzeug ermöglicht. Die andere Endstellung entspricht der Gurtanlegestellung, in welcher sich das obere Ende des Schultergurtes wenig oberhalb des Schulterbereiches des Fahrzeuginsassen befindet. In dieser Stellung ist der Mitnehmer durch einen Anschlag gegen eine Abwärtsbewegung gesichert. Um zu verhindern, daß der Mitnehmer seine der Gurtanlegestellung entsprechende Endstellung verläßt, wenn das Fahrzeug sich bei einem komplexen Unfallablauf überschlägt, hintergreift bei den bekannten Verriegelungsvorrichtungen dieser Art ein schwenkbarer, federbelasteter Sperrhaken den Mitnehmer an seiner vom Anschlag abgewandten Kante. Erst nach Lösung dieses Sperrhakens durch einen geeigneten Steuermechanismus kann der Mitnehmer aus seiner Endstellung heraus bewegt werden.

Bei einer hohen Unfallbeanspruchung ist eine Verformung der lasttragenden Teile eines Sicherheitgurtsystems in einem gewissen Ausmaß unvermeidlich. Dies gilt bei einem Passiv-Sicherheitsgurtsystem auch für den Mitnehmer und die ihm zugeordneten Abstütz- und Anschlagelemente.

Der Erfindung liegt die Aufgabe zugrunde, eine Verriegelungsvorrichtung der eingangs angegebenen Art dahingehend weiterzubilden, daß auch nach einer hohen Unfallbeanspruchung, bei welcher eine erhebliche Verformung der lasttragenden Teile auftritt, die Sicherung des Mitnehmers in seiner der Gurtanlegestellung entsprechenden Endstellung mittels des Sperrhakens gewährleistet ist, so daß bei einem nachfolgenden Überschlag des Fahrzeugs das obere Ende des Schultergurtes in der optimalen Anlegeposition verbleibt.

Diese Aufgabe wird bei einer Verriegelungsvorrichtung der eingangs angegebenen Art erfindungsgemäß dadurch gelöst, daß der Sperrhaken auf derjenigen Seite des Mitnehmers angeordnet ist, zu welcher die bei einer Unfallbeanspruchung des Sicherheitsgurtsystems am Mitnehmer auftretende Zugkraft gerichtet ist. Wenn bei der erfindungsgemäßen Verriegelungsvorrichtung im Beanspruchungsfalle, also beispielsweise bei einem Aufprall des Fahrzeugs auf einem Hindernis, eine hohe Zugkraft über das Gurtband und dessen Endbeschlag am Mitnehmer angreift, so können sich dieser und die ihm abstützenden, am Fahrzeugaufbau befestigten Teile in einem gewissen Ausmaß verformen. Bei einer solchen Verformung kann aber der Mitnehmer nicht von dem Sperrhaken entfernt werden, da die Verformungsrichtung dieselbe Richtung ist, in der sich der Sperrhaken befindet. Wenn sich der Mitnehmer verformt, so wird er sich folglich zu dem Sperrhaken hin verformen. Bei einer starken Verformung des Mitnehmers wird dieser sogar am Sperrhaken anliegen und durch diesen zusätzlich abgestützt werden, was in vorteilhafter Weise bei der Dimension der Bauteile berücksichtigt werden kann. Auch nach einer extrem hohen Unfallbeanspruchung hat sich der Sperrhaken nicht vom Mitnehmer gelöst, so daß bei einem eventuellen nachfolgenden Überschlag der Mitnehmer, und folglich der obere Verankerungspunkt des Schultergurtes, in seiner vorgeschriebenen Stellung verbleibt.

Gemäß einer vorteilhaften Weiterbildung der Erfindung ist der Mitnehmer auf seiner dem Sperrhaken zugewandten Seite mit einer Ausnehmung versehen, in welche die Nase des Sperrhakens den Mitnehmer verriegelnd eintaucht. Diese Ausnehmung kann in erheblichem Maße dazu beitragen, daß nach einer hohen Unfallbeanspruchung, bei welcher sich der Mitnehmer und die ihn abstützenden Teile relativ stark verformt haben, der Sperrhaken weiterhin mit dem Mitnehmer in Eingriff verbleibt, um diesen für einen eventuellen nachfolgenden Überschlag in seiner Stellung zu sichern. Die Nase des Sperrhakens wird sich nämlich an die ihr gegenüberliegende Begrenzungswand der Ausnehmung anlegen und den Mitnehmer auch in seitlicher Richtung abstützen, wobei ein Verbiegen des Sperrhakens nicht nur unschädlich ist, sondern sogar ausgenutzt wird, um die Nase des Sperrhakens dem sich verformenden Mitnehmer nachzuführen.

Eine vorteilhafte Weiterbildung dieser Ausführungsform besteht darin, daß die Ausnehmung des Mitnehmers in Draufsicht rechteckförmig gestaltet ist und zwei parallele, zur Schwenkachse des Sperrhakens senkrechte Begrenzungswandungen aufweist, deren Abstand voneinander deutlich größer ist als die in Richtung dieses Abstandes gemessene Breite des Sperrhakens. Auf grund dieser Bemessung der Ausnehmung verbleiben die Seitenflächen der in die Ausnehmung eingefallenen Nase des Sperrhakens im Abstand von diesen Begrenzungswandungen, wodurch Klappergeräusche verhindert werden.

Bei der bevorzugten Ausführungsform ist weiterhin die Ausnehmung zu derjenigen Seite des Mitnehmers hin offen, die von der Schwenkachse des Sperrhakens abgewandt ist. Durch diese Ausbildung wird erreicht, daß das Kopfstück des Sperrhakens optimal dimensioniert werden kann, weil es an der offenen Seite der Ausnehmung aus dieser herausragen kann.

Weitere Merkmale und Vorteile der Erfindung ergeben sich aus der folgenden Beschreibung einer Ausführungsform und aus der Zeichnung, auf die Bezug genommen wird.

In der Zeichnung zeigen:

Fig. 1 eine schematische Darstellung der Grundkomponenten eines passiven Sicherheitsgurtsystems in einem Kraftfahrzeug;

Fig. 2 eine schematische Perspektivdarstellung einer Verriegelungsvorrichtung für das passive Sicherheitsgurtsystem;

Fig. 3 eine Draufsicht auf den Mitnehmer und die Rückseite des mit diesem in Eingriff stehenden Sperrhakens; und

Fig. 4 eine teilweise im Schnitt gezeigte Seitenansicht der Verriegelungsvorrichtung.

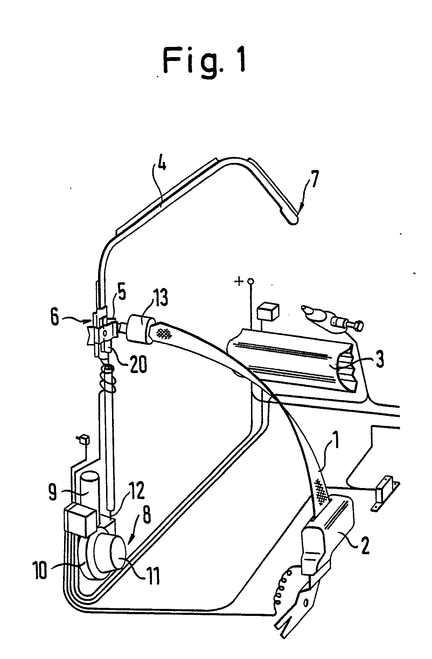

Ein passives Sicherheitsgurtsystem der in Fig. 1 gezeigten Art besteht aus einem Schultergurt 1, einem am Fahrzeugaufbau verankerten Gurtaufroller 2, einem vor dem Sitz angeordneten Kniepolster 3, einer Führungsschiene 4, in welcher ein Mitnehmer 5 zwischen zwei Endstellungen 6, 7 geführt ist, und einem Antriebssystem 8 für den Mitnehmer 5. Dieses Antriebssystem 8 besteht aus einem Elektromotor 9, einem Untersetzungsgetriebe 10, einer über dieses Untersetzungsgetriebe durch den Elektromotor 9 angetriebenen Trommel 11 und einem zug- und druckfesten Kabel 12, dessen freies Ende am Mitnehmer 5 angreift und welches auf die Trommel 11 auf- und von dieser abgewickelt wird. In der Endstellung 6, die der Gurtanlegestellung entspricht, wird der Mitnehmer 5 durch eine Verriegelungsvorrichtung 20 gesichert. Das obere Ende des Schultergurtes 1 ist über einen Beschlag 13 am Mitnehmer 5 befestigt.

Da ein solches passives Sicherheitsgurtsystem bekannt ist (beispielsweise aus der DE-OS 31 36 336), erübrigt sich eine weitere Beschreibung desselben.

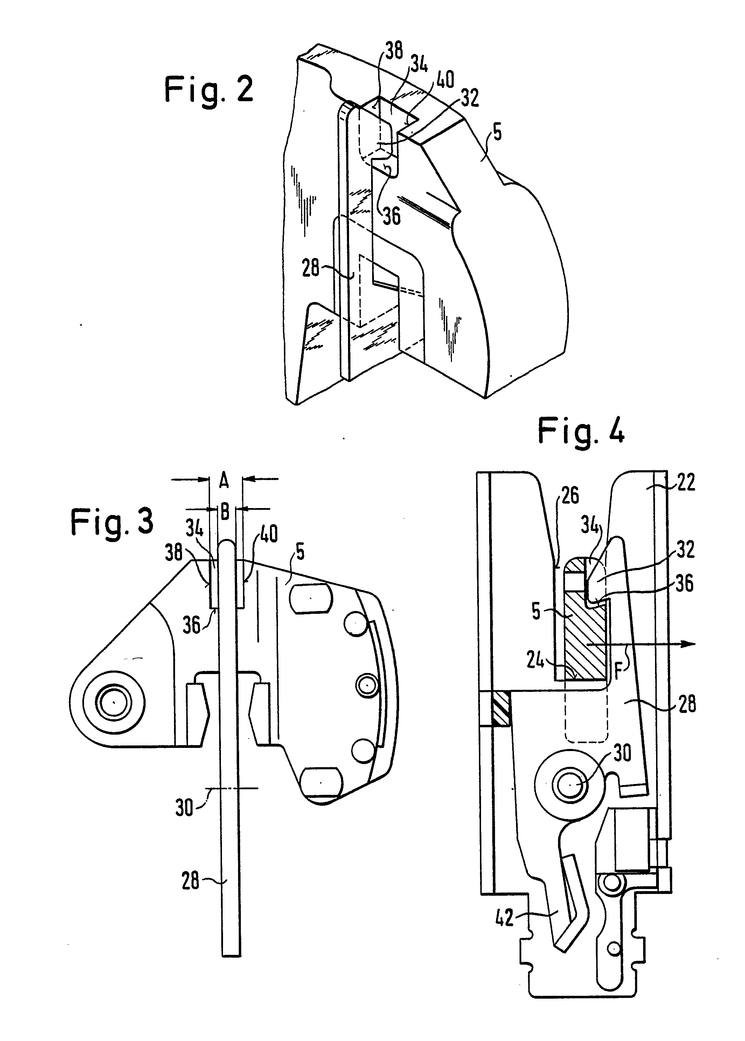

Die Verriegelungsvorrichtung 20 wird nun unter Bezugnahme auf die Fig. 2 bis 4 beschrieben.

In einem am Fahrzeug befestigten Gehäuse 22 endet der Verschiebeweg des Mitnehmers 5 am Boden 24 einer schlitzförmigen Ausnehmung 26, die zur Außenseite des Gehäuses 22 hin geringfügig erweitert ist. In seiner der Gurtanlegestellung entsprechenden Endstellung stützt sich der Mitnehmer 5 an diesem Boden 24 ab. In dem Gehäuse 22 ist ein Sperrhaken 28 um eine Achse 30 verschwenkbar gelagert. Der Sperrhaken 28 weist eine Nase 32 auf, die das freie Ende des Sperrhakens 28 bildet.

Wie am besten aus Fig. 2 ersichtlich ist, weist der Mitnehmer 5 an seiner von der Achse 30 abgewandten Kante eine Ausnehmung 34 auf, in welche die Nase 32 des Sperrhakens 28 unter der Wirkung einer (nicht gezeigten) Feder einfällt. Die Ausnehmung 34 ist auf ihrer von der Achse 30 abgewandten Seite offen, so daß das Kopfstück des Sperrhakens 28, welches die Nase 32 bildet, aus der Ausnehmung 34 auf dieser Seite herausragen kann. Die gegenüberliegende Seite der Ausnehmung 34 bildet eine Rastkante 36, an welcher die ihr· gegenüberliegende Fläche der Nase 32 des Sperrhakens 28 angreift. Die beiden parallelen Seitenwände 38, 40 der Ausnehmung 34 liegen, wie aus Fig. 3 ersichtlich ist, in einem Abstand A voneinander, der erheblich größer ist als die in Richtung dieses Abstandes A gemessene Breite B des Sperrhakens 28. Der Abstand A ist vorzugsweise etwa doppelt so groß wie die Breite B des Sperrhakens 28. Durch diese Gestaltung und Dimensionierung der Ausnehmung 34 verbleiben alle Flächen des Sperrhakens 28, insbesondere seine Nase 32, in geringfügigem Abstand von den jeweils gegenüberliegenden Flächen der Ausnehmung 34, so daß Klappergeräusche sicher vermieden werden.

In Fig. 4 ist durch einen Pfeil F die Zugkraft veranschaulicht, die bei einer Unfallbeanspruchung über den Schultergurt 1 und dessen Beschlag 13 am Mitnehmer 5 wirksam wird. Wie aus Fig. 4 weiterhin ersichtlich ist, liegt der Sperrhaken 28 dem Mitnehmer 5 in Richtung dieses Pfeiles F gegenüber. Unter der Wirkung der Zugkraft F können der Mitnehmer 5 und das diese abstützende Gehäuse 22 in einem gewissen Ausmaße verformt werden. Hierbei nähert sich aber der Mitnehmer 5 an den Sperrhaken 28 an, so daß die Nase 32 des Sperrhakens 28 in Eingriff mit der Ausnehmung 34 des Mitnehmers 5 verbleibt. Bei starker Verformung der Teile kann sich der Mitnehmer 5 auch an der ihm gegenüberliegenden Fläche des Sperrhakens 28 abstützen.

Die Richtung der Zugkraft F hängt natürlich von dem jeweiligen Unfallgeschehen ab. Bei einem typischen Aufprallunfall wird die Zugkraft F annähernd in Fahrtrichtung und geringfügig schräg nach unten orientiert sein. Auf diesen Fall beziehen sich die oben angegebenen Definitionen bezüglich der Anordnung des Sperrhakens 28 relativ zu dem Mitnehmer 5.

Bei einem komplexen Unfallablauf werden am Mitnehmer 5 Zugkräfte auftreten, die auch seitliche Komponenten aufweisen, die dazu führen können, daß eine Seitenfläche des Sperrhakens 28 im Bereich der Nase 32 an einer Seitenwand 38 oder 40 der Ausnehmung 34 zur Anlage kommt und sich dort abstützt. Die Nase 32 des Sperrhakens 28 kann sich daher aus der Ausnehmung 34 nicht lösen. Bei extrem hoher Belastung kann auch der Sperrhaken 28 in seitlicher Richtung verbogen werden, wodurch er der Verformung des Mitnehmers 5 folgen kann, damit seine Nase 32 in der Ausnehmung 34 verrastet bleibt.

Der Sperrhaken 28 weist an seinem von der Nase 32 abgewandten Ende einen Betätigungsarm 42 auf. Zur Lösung des Sperrhakens 28 von dem Mitnehmer 5 wird durch ein (nicht gezeigtes) Auslöseelement ein Druck auf diesen Betätigungsarm 42 ausgeübt, so daß dieser in Fig. 4 im Uhrzeigersinn verschwenkt wird, wodurch die Nase 32 aus der Ausnehmung 34 herausgehoben wird und der Mitnehmer 5 aus dem Schlitz 26 herausbewegt werden kann.

## Ansprüche

1. Verriegelungsvorrichtung für den in einer Führung zwischen einer Gurtanlegestellung und einer Gurtablegestellung beweglichen Mitnehmer eines Passiv-Sicherheitsgurtsystems, mit einem schwenkbar gelagerten Sperrhaken, der in der Gurtanlegestellung des Mitnehmers an diesem angreift, dadurch gekennzeichnet, daß der Sperrhaken (28) auf derjenigen Seite des Mitnehmers (5) angeordnet ist, zu welcher die bei einer Unfallbeanspruchung des Sicherheitsgurtsystems am Mitnehmer (5) auftretende Zugkraft (F) gerichtet ist.

2. Verriegelungsvorrichtung nach Anspruch 1, dadurch gekennzeichnet, daß der Mitnehmer (5) auf seiner dem Sperrhaken (28) zugewandten Seite eine Ausnehmung (34) aufweist, in welche die Nase (32) des Sperrhakens (28) den Mitnehmer (5) verriegelnd eintaucht.

3. Verriegelungsvorrichtung nach Anspruch 2, dadurch gekennzeichnet, daß die Ausnehmung (34) des Mitnehmers (5) in Draufsicht rechteckförmig gestaltet ist und zwei parallele, zur Schwenkachse (30) des Sperrhakens (28) senkrechte Begrenzungswandungen (38, 40) aufweist, deren Abstand (A) voneinander deutlich größer ist als die in Richtung dieses Abstandes (A) gemessene Breite (B) des Sperrhakens (28), so daß die Seitenflächen der in die Ausnehmung (34) eingefallenen Nase (32) des Sperrhakens (28) im Abstand von diesen Begrenzungswandungen (38, 40) verbleiben.

4. Verriegelungsvorrichtung nach Anspruch 2 oder 3, dadurch gekennzeichnet, daß die Ausnehmung (34) zu derjenigen Seite des Mitnehmers (5) hin, die von der Schwenkachse (30) des Sperrhakens (28) abgewandt ist, offen ist.

# Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 118 824 (TAKATA KOJYO CO., LTD) * Seite 1, Zeilen 5-10; Seite 1, Zeile 118 - Seite 2, Zeile 9; Seite 3, Zeilen 28-34; Seite 9, Zeilen 20-33; Seite 9, Zeile 104 - Seite 10, Zeile 66; Figuren 36-38,56-58 * --- | 1,2 | B 60 R 22/06 |
| X | US-A-4 573 709 (KAWAI et al.) * Spalte 3, Zeilen 21-50; Figur 2 * | 1,2 | |
| A | --- | 3 | |
| A | GB-A-2 172 192 (ASE (UK) LTD) * Seite 1, Zeilen 6-21; Seite 2, Zeilen 24-34; Figuren 1,2 * --- | 1 | |
| A | DE-A-2 821 151 (VOLKSWAGENWERK AG) * Anspruch 2; Seite 6, Zeile 4 - Seite 7, Zeile 3; Figur 1 * ----- | 4 | |

RECHERCHIERTE SACHGEBIETE (Int. Cl.5)

B 60 R

Der vorliegende Recherchenbericht wurde für alle Patentansprüche erstellt

| Recherchenort | Abschlußdatum der Recherche | Prüfer |
|---|---|---|
| DEN HAAG | 06-12-1989 | AREAL CALAMA A. |

EPO FORM 1503 03.82 (P0403)